# EUROPÄISCHE PATENTSCHRIFT

(11) **EP 0 743 992 B1**
(45) Veröffentlichungstag und Bekanntmachung des Hinweises auf die Patenterteilung: **14.01.1998**
(21) Anmeldenummer: 95907007.9
(22) Anmeldetag: 01.02.1995
(51) Int. Cl.: D06M 15/513

(54) **SPINNPRÄPARATIONEN FÜR SYNTHETISCHE FILAMENTFASERN**
SPINNING COMPOSITIONS FOR SYNTHETIC FILAMENTS
COMPOSITIONS POUR LE FILAGE DE FILAMENTS SYNTHETIQUES

(30) Priorität: 10.02.1994 DE 4404176
(43) Veröffentlichungstag der Anmeldung: 27.11.1996
(73) Patentinhaber: Henkel Kommanditgesellschaft auf Aktien, 40191 Düsseldorf (DE)
(72) Erfinder: BIRNBRICH, Paul, D-42719 Solingen (DE); BIALAS, Norbert, D-41542 Dormagen (DE); EICKEN, Ulrich, D-41353 Korschenbroich (DE); MATTHIS, Raymond, D-40627 Düsseldorf (DE)
(86) Internationale Anmeldenummer: EP9500360
(87) Internationale Veröffentlichungsnummer: WO9521956

(56) Entgegenhaltungen:
- EP-A- 0 421 298
- EP-A- 0 511 589

## Beschreibung

### Gebiet der Erfindung

Die Erfindung betrifft Spinnpräparationen für synthetische Filamentfasern, die sich aufgrund ihres Gehalts an speziellen Polyetherpolycarbonaten als Gleitmittel durch gute biologische Abbaubarkeit und geringe Reibungskoeffizienten auszeichnen.

### Stand der Technik

Synthetische Chemiefasern werden sofort nach dem Filamentbildungsprozeß mit Präparationsmitteln versehen, die für die Weiterverarbeitung der Fasern unentbehrlich sind. Diese in der deutschsprachigen Literatur zumeist als "Spinnpräparationen" bezeichneten Präparationsmittel (vergl. Ullmann's Encyclopädie der technischen Chemie, Band 23, Seiten 7-9, Verlag Chemie, Weinheim 1983) vermitteln den Filamenten die erforderlichen Gleiteigenschaften und zwar zwischen den Filamenten und zwischen den Filamenten und den Führungselementen der Spinnmaschinen. Darüberhinaus sollen Spinnpräperationen meist noch folgende Bedingungen erfüllen: Fadenschluß, antistatische Wirkung, gute Benetzung des Filamentes, Temperaturbeständigkeit, keine Metallkorrosion, keine Ablagerungen an den Streck- und Texturierorganen, leichte Entfernbarkeit von der Faser und physiologische Unbedenklichkeit. Da die Spinnpräperationen bei der Entfernung von der Faser, z. B. vor dem Färben, ins Abwasser gelangen können, ist es darüber hinaus wünschenswert, daß sie und vor allem die in hohen Mengen in diesen enthaltenen Gleitmittel biologisch gut abbaubar sind.

Die Gleitmittel in den Spinnpräparationen sollen vor allem den Filamenten die erforderlichen Gleiteigenschaften verleihen. Darüber hinaus müssen die Gleitmittel temperaturbeständig, nicht korrosiv, von der Faser leicht entfernbar und physiologisch unbedenklich sein, damit die Anforderungen an die Spinnpräparationen erfüllt werden. Typische Gleitmittel für Spinnpräparationen sind pflanzliche, tierische und mineralische Öle oder auch synthetische Ester, Silicone, Polyether, ethoxylierte Fettsäuren und dergleichen (vergl. Ullmann's Encyclopädie der technischen Chemie, Band 23, Seiten 7-9, Verlag Chemie, Weinheim 1983).

Spinnpräparationen für synthetische Filamentfasern sollten darüber hinaus hohen thermischen Beanspruchungen standhalten, wie sie bei der Texturierung von Polyester- und Polyamidfasern auftreten. Dementsprechend werden als Gleitmittel derartiger Spinnpräparationen häufig sogenannte temperaturbeständige Esteröle eingesetzt; darunter sind Ester höherer Fettsäuren mit langkettigen Fettalkoholen zu verstehen.

Anstelle der temperaturbeständigen Esteröle werden auch Blockcopolymere von Polyethylenoxid-Polypropylenoxid eingesetzt, die dem Fachmann unter der Bezeichnung "Pluronics" bekannt sind. Pluronics vermögen bei höheren Temperaturen rückstandslos zu depolymerisieren. Bei der Texturierung ist dies von besonderem Vorteil, da Ablagerungen an Filamenten und Texturierorganen vermieden werden. Nachteilig ist jedoch, daß beim Texturieren die Bruchstücke der Pluronics, z. B. Aldehyde, in die Atmosphäre entweichen, was schädlich für Mensch und Umwelt sein kann. Darüber hinaus haben die Pluronics den gravierenden Nachteil, daß sie so gut wie nicht biologisch abbaubar sind.

Aus der deutschen Patentanmeldung DE-A-41 13 889 sind wasserlösliche, biologisch abbaubare Polycarbonate und ihre Verwendung als Gleitmittel für Synthesegarne bekannt, die zwingend
a) mindestens einen Polyalkylenglykoletherblock,
b) mindestens einen ggf. ethoxylierten Fettalkohol mit 6 bis 22 C-Atomen und
c) einen a) mit b) verbundenen Kohlensäurerest
aufweisen. Derartige Polycarbonate zeigen zwar ein akzeptables thermisches Verhalten, sind aber insbesondere in ihren Gleiteigenschaften bei höheren Geschwindigkeiten der maschinellen Verarbeitung synthetischer Filamente verbesserungsbedürftig.

Aus der europäischen Patentanmeldung EP-A-421 298 sind Gleitmittelzusammensetzungen bekannt, die Kohlensäurepolyolester enthalten und die sich durch ihre Gleitwirkung und geringe Rauchentwicklung auszeichnen. Als Anwendungsgebiete werden industrielle Getriebeöle, Motorenöle, Schmiermittel für Kühlschränke und Schmiermittel für Fasern genannt. Insbesondere zielt die Erfindung auf FKW-haltige Schmiermittelzusammensetzungen für Kühlschränke ab.

In der amerikanischen Patentschrift US 4,314,000 sind Polycarbonate aus einem niederen Alkohol und einem oder mehreren Polyoxyalkylenblöcken bekannt, die als Gleitmittel für Spinnpräparationen eingesetzt werden können. Diese Polycarbonate zeigen zwar hervorragende Wasserlöslickeit, aber verbesserungsbedürftige Gleiteigenschaften.

Aus der europäischen Offenlegungsschrift EP-A- 146234 sind Polycarbonate bekannt, die durch Umsetzung von Alkoholen mit cyclischen Carbonaten unter Decarboxylierung hergestellt und anschließend alkoxyliert werden können. Sie sind auch als Gleitmittel in Spinnpräparationen brauchbar.

### Beschreibung der Erfindung

Die vorliegende Erfindung geht von der Aufgabenstellung aus, Spinnpräparationen für synthetische Filamentfasern bereitzustellen, die Gleitmittel mit guter biologischer Abbaubarkeit enthalten. Zudem sollten diese Gleitmittel mit einem ausgewogenen Verhältnis von hydrophoben und hydrophilen Molekülteilen sowohl gute Gleiteigenschaften als auch eine gute Wasserlöslichkeit aufweisen. Vor allem jedoch waren geringe Reibungskoeffizienten an Polyesterfilamenten angestrebt, insbesondere auch unter den harten Bedingungen der Friktionstexturierung.

Diese Aufgabe wurde erfindungsgemäß gelöst durch Spinnpräparationen für synthetische Filamentfasern enthaltend ein Gleitmittel mit guter biologischer Abbaubarkeit, wobei das Gleitmittel ein wasserlösliches Polyetherpolycarbonat der allgemeinen Formel (I) ist;

R¹-O-[(R²-O-)ₙCOO-]ₘR³ (I)

dabei bedeuten:
- R¹: R⁴-(O-CH₂-CH₂-)ₓO-CO-, CH₃-O-CO-, CH₃-CH₂-O-CO-, Wasserstoff,
- R² ein zweiwertiger Kohlenwasserstoffrest mit 1 bis 22 C-Atomen, der gesättigt oder ungesättigt, geradkettig oder verzweigt sein kann,
- R³: R⁴(-O-CH₂-CH₂-)y,
- R⁴: ein einwertiger Kohlenwasserstoffrest mit 1 bis 22 C-Atomen, der gesättigt oder ungesättigt, geradkettig oder verzweigt sein kann
- n: eine ganze Zahl im Bereich von 1 bis 100,
- m: eine ganze Zahl im Bereich von 1 bis 50,
- x: eine Zahl im Bereich von 11 bis 100,
- y: eine Zahl im Bereich von 11 bis 100.

Ein Gegenstand der vorliegenden Erfindung sind daher Spinnpräparationen für synthetische Filamentfasern enthaltend ein Gleitmittel mit guter biologischer Abbaubarkeit, wobei das Gleitmittel ein wasserlösliches Polyetherpolycarbonat der allgemeinen Formel (I) ist;

R¹-O-[(R²-O-)ₙCOO-]ₘR³ (I)

dabei bedeuten:
- R¹: R⁴(-O-CH₂-CH₂-)ₓO-CO-, CH₃-O-CO-, CH₃-CH₂-O-CO-, Wasserstoff,
- R² ein zweiwertiger Kohlenwasserstoffrest mit 1 bis 22 C-Atomen, der gesättigt oder
   ungesättigt, geradkettig oder verzweigt sein kann,
- R³: R⁴(-O-CH₂-CH₂-)y-,
- R⁴: ein einwertiger Kohlenwasserstoffrest mit 1 bis 22 C-Atomen, der gesättigt oder
   ungesättigt, geradkettig oder verzweigt sein kann
- n: eine ganze Zahl im Bereich von 1 bis 100,
- m: eine ganze Zahl im Bereich von 1 bis 50,
- x: eine Zahl im Bereich von 11 bis 100,
- y: eine Zahl im Bereich von 11 bis 100.

Die Herstellung der Polyetherpolycarbonate erfolgt vorzugsweise durch eine stufenweise Umsetzung. In der ersten Verfahrensstufe werden Dialkylcarbonate, insbesondere Dimethylcarbonat oder Diethylcarbonat, mit ethoxyliertem monofunktionellen Alkohole R⁴(-O-CH₂-CH₂-)ₓOH oder mit Mischungen von ethoxylierten monofunktionellen Alkoholen R⁴(-O-CH₂-CH₂-)ₓOH und R⁴(-O-CH₂-CH₂-)_{y}OH umgesetzt. Dabei wird der leichter flüchtige Alkohol des Carbonats (z.B. Methanol oder Ethanol) gegebenenfalls zusammen mit überschüssigem Dialkylcarbonat abdestilliert. Anschließend werden zu der Reaktionsmischung zweiwertige Alkohole HO-R²-OH sowie stöchiometrische Mengen an weiterem Dialkylcarbonat gegeben und umgesetzt. Nach Abreaktion der zweiwertigen Alkohole wird wiederum der leichter flüchtige Alkohol des Carbonats (z.B.Methanol oder Ethanol) sowie gegebenenfalls überschüssiges Dialkylcarbonat abdestilliert. Man kann die Reaktionsschritte des Verfahrens auch umkehren, d.h. zuerst die Diole und anschließend die monofunktionellen Alkohole zugeben. Wie dem Fachmann bekannt ist, entscheidet die Menge an eingesetzten ethoxylierten monofunktionellen Alkoholen darüber, ob in den Polyetherpolycarbonaten der Formel (I) sich beide Reste R¹ und R³ von ethoxylierten monofunktionellen Alkoholen ableiten oder nicht. Werden unterstöchiometrische Mengen an ethoxylierten monofunktionellen Alkoholen umgesetzt, entsteht ein Gemisch, in dem die Hauptkomponente die Verbindung ist, bei der beide Reste R¹ und R³ sich von ethoxylierten monofunktionellen Alkoholen ableiten. Daneben entstehen in untergeordneten Mengen Verbindungen der Formel I, in der entweder der Alkylrest des Carbonats nicht ersetzt (R¹ = CH₃-O-CO-, CH₃-CH₂-O-CO-) ist oder eine Hydroxylgruppe des zweiwertigen Alkohols (R¹= Wasserstoff) bedeutet. Bevorzugt im Sinne der Erfindung werden die ethoxylierten monofunktionellen Alkohole zu den zweiwertigen Alkoholen im molaren Verhältnis von 1:1 bis 1:100, vorzugsweise 1:1 bis 1:20 und insbesondere 1:1 bis 1:5 umgesetzt. Die molare Menge an Dialkylcarbonaten sollte mindestens stöchiometrisch sein, bevorzugt wird im Überschuß gearbeitet. Des weiteren ist dem Fachmann bekannt, daß bei einer derartigen Umesterungsreaktion in Abhängigkeit der Reaktionsdauer unterschiedliche Mengen an Nebenprodukten entstehen können. Außer unumgesetzten ethoxylierten monofunktionellen Alkoholen können in der Reaktionsmischung beispielsweise über eine Carbonatgruppe verbrückte ethoxylierte monofunktionelle Alkohole oder Carbonatterminierte Alkohole im Reaktionsgemisch vorliegen. Weitere Nebenprodukte können sein aus Diol und Carbonat aufgebaute lineare oder cyclische Carbonate. Sofern die stufenweise Umsetzung jedoch insgesamt etwa 2 bis 24, vorzugsweise 4 bis 15 Stunden beträgt, machen die Nebenprodukte unter 15 mol%- bezogen auf Reaktionsmischung- aus.

Geeignete ethoxylierte monofunktionelle Alkohole R⁴(O-CH₂-CH₂)ₓOH und R⁴(O-CH₂CH₂)_{y}OH sind beispielsweise die Ethoxylate von Methanol, Ethanol, n- und i- Propanol, Butanol, Caprylalkohol, Hexanol, Octanol, Nonanol, Decanol, Nonadecanol, Laurylalkohol,Cetylalkohol, Stearylalkohol sowie die aus natürlichen Fetten gewonnenen Alkoholmischungen oder auch der einfach ungesättigte Oleylalkohol. Besonders bevorzugt werden die Ethoxylate der gesättigten Alkohole, wobei R⁴ für einen gesättigten Kohlenwasserstoffrest mit 1 bis 10 C-Atomen steht. Sofern Alkoholmischungen von verschiedenen Alkoholen eingesetzt werden, steht in der allgemeinen Formel (I) R⁴ für die Kohlenwasserstoffreste dieser Alkoholmischung. Zwingend erforderlich im Sinne der Erfindung ist, daß an den monofunktionellen Alkoholen mindestens 11 Mol Ethylenoxid pro Mol Alkohol vorhanden sind (Index x und y in Formel (I)). Selbstverständlich können auch Alkoholmischungen eingesetzt werden, die einen unterschiedlichen Ethoxylierungsgrad aufweisen, sofern dieser mindestens 11 beträgt. Die Herstellung dieser Alkoholethoxylate ist literaturbekannt und kann beispielsweise durch Ethoxylierung des monofunktionellen Alkohols oder durch Endgruppenverschluß von Polyethylenglykol erfolgen.

Als zweiwertige Alkohole (Diole) HO-R²-OH kommen zum einen 1,2- Alkandiole in Betracht, die 1 bis 22 C-Atome haben wie 1,2-Propandiol, 1,2-Octandiol, 1,2-Decandiol, 1,2-Hexadecanol, 1,2-Octadecanol und/oder deren technischen Mischungen. Derartige 1,2-Alkandiole sind beispielsweise zugänglich durch sauer katalysierte Ringöffnung von endständig epoxidierten Alkanen mit Wasser. Weitere geeignete Diole sind alpha,omega -Alkandiole, die endständig je eine Hydroxylgruppe aufweisen, und durch Hydrierung der entsprechenden Dicarbonsäuren zugänglich sind. Beispiele für geeignete alpha,omega-Alkandiole sind 1,8-Octandiol, 1,10-Decandiol, 1,12-Dodecandiol, 1,16 Hexadecanol, 1,18-Octadecanol und/oder deren technische Mischungen. Weitere geeignete Diole sind die Glykole Ethylenglykol und deren Homologe, Propylenglykol und deren Homologe und Neopentylglykol. Sofern die Homologen des Ethylen- oder Propylenglykols eingesetzt werden, steht in der allgemeinen Formel (I) der Index n für eine Zahl größer 1, wie z.B. für Dipropylenglykol (n = 2). Innerhalb der Gruppe der Glykole werden besonders gute Ergebnisse erhalten, wenn 1,2-Propylenglykol oder Dipropylenglykol eingesetzt werden. Anstelle der Polypropylenglykole können auch Polytetrahydrofurane oder Polycaprolactondiole als Diole verwendet werden.

Besonders bevorzugt im Sinne der Erfindung werden Polyetherpolycarbonate der allgemeinen Formel (I), in der bedeuten
- R²: einen zweiwertigen Kohlenwasserstoffrest mit 2 bis 10 C-Atomen
- R⁴: einen einwertigen Kohlenwasserstoffrest mit 1 bis 10 C-Atomen
- n : eine ganze Zahl im Bereich von 1 bis 15
- m : eine ganze Zahl im Bereich von 1 bis 10
- x : eine Zahl im Bereich von 11 bis 50
- y : eine Zahl im Bereich von 11 bis 50 und
- R¹ und R³ die obige Bedeutung haben.
Innerhalb dieser bevorzugten Ausführungsform sind besonders geeignete Polyetherpolycarbonate der allgemeinen Formel (I), in der bedeuten:
- R²: einen gesättigten zweiwertigen C2-C10- Kohlenwasserstoffrest
- R⁴: einen gesättigten einwertigen C1-C10- Kohlenwasserstoffrest
- n : die Zahl 1 oder 2 .

Beispiele für derartige Polyetherpolycarbonate wären solche, die sich von den schon definierten ethoxylierten monofunktionellen Alkoholen mit einem Ethoxylierungsgrad von 11 bis 50 (x,y) und einem niederen Diol wie 1,2-Propylenglykol (n=1) oder Diethylenglykol (n=2) ableiten, wobei der Block aus Diol und Carbonat sich bis zu 10 Mal wiederholen kann (m=1 bis 10).

Die erfindungsgemäßen Spinnpräparationen können neben den Polyetherpolycarbonaten (I) als Gleitmittel auch weitere aus dem Stand der Technik bekannte Gleitmittel enthalten, beispielsweise Mineralöle, Fettsäureester mit 8 bis 22 C-Atomen im Fettsäurerest und 1 bis 22 C-Atomen im Alkoholrest, z. B. Palmitinsäuremethylester, Isobutylstearat und/oder Talgfettsäure-2-Ethylhexylester, Polyolcarbonsäureester, beispielsweise Kokosfettsäureester von Glycerin und/oder alkoxylierten Glycerinen, Silikone, beispielsweise Dimethylpolysiloxan und/oder Polyalkylenglykole, beispielsweise Ethylenoxid-Propylenoxid-Mischpolymere.

Neben den Gleitmittel können die erfindungsgemäßen Spinnpräparationen ferner Emulgatoren, Netzmittel und/oder Antistatika sowie gegebenenfalls übliche Hilfsmittel wie pH-Wert-Regulatoren, Fadenschlußmittel, Bakterizide und/oder Korrosionsschutzmittel enthalten.

Als Emulgatoren, Netzmittel und/oder Antistatika kommen anionische, kationische und/oder nichtionische Tenside in Betracht, wie Mono- und/oder Diglyceride, beispielsweise Glycerinmono- und/oder Glycerindioleat, alkoxylierte, vorzugsweise ethoxylierte und/oder propoxylierte Fette bzw. Öle, Fettalkohole mit 8 bis 24 C-Atomen und/oder C₈₋₁₈-Alkylphenole, beispielsweise Anlagerungsprodukte von 25 mol Ethylenoxid an Rizinusöl und/oder Anlagerungsprodukte von 8 mol Propylenoxid und 6 Mol Ethylenoxid an C₁₆₋₁₈-Fettalkohole, gewünschtenfalls alkoxylierte C₈₋₂₄-Fettsäuremono- und/oder Diethanolamide, beispielsweise - gegebenenfalls ethoxyliertes - Ölsäuremono- und/oder -diethanolamid, Talgfettsäuremono- und/oder -diethanolamid und/oder Kokosfettsäuremono- und/oder -diethanolamid, Alkali- und/oder Ammoniumsalze alkoxylierter, vorzugsweise ethoxylierter und/oder propoxylierter, gegebenenfalls endgruppenverschlossener C₈₋₂₂-Alkyl- und/oder C₈₋₂₂-Alkylenalkoholsulfonate, Umsetzungsprodukte aus gegebenenfalls alkoxylierten C₈₋₂₂-Alkylalkoholen mit Phosphorpentoxid oder Phosphoroxychlorid in Form ihrer Alkali-, Ammonium- und/oder Aminsalze, beispielsweise Phosphorsäureester von ethoxylierten C₁₂₋₁₄-Fettalkoholen, neutralisiert mit Alkanolamin, Alkali- und/oder Ammoniumsalze von C₈₋₂₂-Alkylsulfosuccinaten, beispielsweise Natriumdioctylsulfosuccinat und/oder Aminoxiden, beispielsweise Dimethyldodecylaminoxid. Bei dieser beispielhaften Aufzählung ist zu berücksichtigen, daß eine Vielzahl der genannten Substanzen nicht nur eine Funktion, sondern auch mehrere Funktionen besitzen können; so kann ein Antistatikum etwa gleichzeitig als Emulgator wirken.

Fakultative Bestandteile können die üblichen Hilfsstoffe sein. Als Fadenschlußmittel sind die aus dem Stand der Technik bekannten Polyacrylate, Fettsäuresarcoside und/oder Mischpolymerisate mit Maleinsäureanhydrid (vergl. Melliand Textilberichte (1977), Seite 197) und/oder Polyurethane gemäß DE-A-38 36 468, pH-Wert-Regulatoren wie C₁₋₄-Carbonsäuren und/oder C₁₋₄-Hydroxycarbonsäuren, z. B. Essigsäure und/oder Glykolsäure, Alkalihydroxide wie Kaliumhydroxid und/oder Amine wie Triethanolamid, Bakterizide und/oder Korrosionsschutzmittel möglich.

Die erfindungsgemäßen Spinnpräparationen lassen sich durch intensives Vermischen der Polyethercarbonate (I) sowie gegebenenfalls weiterer Gleitmittel, Emulgatoren, Netzmittel, Antistatika und/oder üblicher Hilfsstoffe bei ca. 18-25 °C hergestellen.

Wie in der Textilindustrie üblich, werden die Spinnpräparationen in Form ihrer wäßrigen Dispersionen auf die synthetischen Filamentfasern unmittelbar nach Austritt aus der Spinndüse appliziert. Die Spinnpräparationen, die eine Temperatur zwischen 18 und 60 °C haben, werden dabei mit Hilfe von Auftragswalzen oder Dosierpunkten über geeignete Applikatoren aufgebracht. Bevorzugt werden Spinnpräparationen in Form ihrer wäßrigen Dispersion, die einen Gesamtaktivsubstanzgehalt zwischen etwa 3 und 40 Gew.-%, vorzugsweise zwischen 5 und 30 Gew.-%, aufweisen. Bezogen auf den Gesamtaktivsubstanzgehalt enthalten dabei die erfindungsgemäßen Spinnpräparationen
a) 35 bis 100 Gew.-% Gleitmittel,
b) 0 bis 65 Gew.-% Emulgatoren, Antistatika und/oder Netzmittel 1
c) 0 bis 10 Gew.-% pH-Wert-Regulatoren, Bakterizide und/oder Korrosionsschutzmittel,
wobei die Mengen so gewählt werden, daß sie sich zu 100 Gew.-% addieren. Die in dieser Aufzählung genannten Gleitmittel umfassen die beschriebenen Polyetherpolycarbonate (I) ebenso wie die aus dem Stand der Technik bekannten Gleitmittel mit der Maßgabe, daß mindestens 50 Gew.-%, vorzugsweise mindestens 75 Gew.-% und insbesondere 100 Gew.-% der Gleitmittel, Polyethercarbonate der oben angegebenen allgemeinen Formel (I) sind.

Die Auftragsmenge der Spinnpräparationen in Form ihrer wäßrigen Dispersion liegt in dem für die Textilindustrie üblichem Bereich zwischen 0,1 und 3 Gew.-%, bezogen auf das Gewicht der Filamentfasern. Mit den erfindungsgemäßen Spinnpräparationen werden synthetische Filamentfasern aus Polypropylen, Polyester und/oder Polyamid versehen. Die erfindungsgemäßen Spinnpräparationen vermitteln den synthetischen Filamentfasern die erforderlichen Gleiteigenschaften. Auch während der Texturierung der synthetischen Filamentfasern beweisen die erfindungsgemäßen Spinnpräparationen genügend hohe thermische Stabilität, so daß keine bzw. nur geringe unerwünschte Ablagerungen auf den Filamentfasern und/oder den Texturierorganen festzustellen sind. Auch die Einkräuselung der in den erfindungsgemäßen Spinnpräparationen behandelten synthetischen Filamentfasern ist leicht möglich und beständig.

Von ganz besonderem Vorteil sind die erfindungsgemäßen Spinnpräparationen aufgrund ihres Gehaltes an Polyetherpolycarbonaten (I) im Hinblick auf ihre gute biologische Abbaubarkeit. Von weiterem Vorteil ist es, daß die erfindungsgemäßen Polyetherpolycarbonate (I) geringere Reibungskoeffizienten an Polyester-Filamenten aufweisen als die in der Literatur für diese Anwendung bereits beschriebenen Polyethercarbonate. Darüber hinaus sind die erfindungsgemäßen Polyethercarbonate (I) niedrigviskoser als die literaturbeschriebenen Verbindungen und eignen sich deshalb ganz besonders für die beanspruchte Anwendung.

Ein weiterer Gegenstand der vorliegenden Erfindung ist dementsprechend die Verwendung von Polyetherpolycarbonaten der Formel (I)

R¹-O-[(R²-O-)ₙCOO]ₘ-R³ (I)

dabei bedeuten:
- R¹: R⁴(O-CH₂-CH₂-)ₓO-CO, CH₃-O-CO, CH₃-CH₂-O-CO, Wasserstoff,
- R²: ein zweiwertiger Kohlenwasserstoffrest mit 1 bis 22 C-Atomen, der gesättigt oder ungesättigt, geradkettig oder verzweigt sein kann,
- R³: R⁴(O-CH₂-CH₂-)_{y},
- R⁴: ein einwertiger Kohlenwasserstoffrest mit 1 bis 22 C-Atomen, der gesättigt oder ungesättigt, geradkettig oder verzweigt sein kann
- n: eine ganze Zahl im Bereich von 1 bis 100,
- m: eine ganze Zahl im Bereich von 1 bis 50,
- x: eine Zahl im Bereich von 11 bis 100,
- y: eine Zahl im bereich von 11 bis 100
als Gleitmittel mit guter biologischer Abbaubarkeit in Spinnpräparationen für synthetische Filamentfasern.

Die folgenden Beispiele dienen der Erläuterung der Erfindung und sind nicht einschränkend zu verstehen.

### Beispiele

### 1. Abkürzungen

Anlagerungsprodukte von Ethylenoxid an Alkohole wurden in abgekürzter, dem Fachmann jedoch vertrauter Schreibweise wiedergegeben. So beispielsweise Methanol x 11 EO (für ein Anlagerungsprodukt von 11 Mol Ethylenoxid pro Mol Methanol) oder 1-Butanol x 12 EO (für ein Anlagerungsprodukt von 12 Mol Ethylenoxid pro Mol 1-Butanol).

### 2. Herstellung der erfindungsgemäßen Polyetherpolycarbonate

### Beispiel 1:

In einem Glaskolben ausgerüstet mit Rührer und Rückflußkühler wurden 250 g CH₃O-(CH₂CH₂O)₁₁H (a) mit 50 g Dimethylcarbonat (b) und 2,7 g pulverförmigem Calciumoxid (c) 2 Stunden bei 130 °C Bad- und 100 °C Sumpftemperatur unter Rückfluß erhitzt. Anschließend wurde ein auf 70 °C geheizter Intensivkühler auf den Kolben aufgesetzt und über eine darauf angebrachte Destillationsbrücke das entstehende Methanol zusammen mit dem begleitenden Dimethylcarbonat langsam abdestilliert. Nachdem kein Kondensat mehr überdestillierte (nach ca. 11 Stunden), wurden 38,1 g Propylenglykol-1,2 (d) und 33,3 g Dimethylcarbonat (e) zur Reaktionsmischung gegeben. Die Reaktionsmischung wurde anschließend 2 Stunden unter Rückfluß erhitzt. Danach wurde wie oben beschrieben das entstehende Methanol mit dem begleitenden Dimethylcarbonat abdestilliert. Als kein Kondensat mehr entstand (nach ca. 4 Stunden) wurden die restlichen flüchtigen Anteile durch Evakuieren (100 °C, 18 mbar) entfernt. Danach wurde das Calciumoxid abfiltriert.

### Beispiel 2:

Durchführung wie in Beispiel 1 beschrieben, wobei folgende Edukte eingesetzt wurden:
a) 250 g CH₂O-(CH₂CH₂O)₁₁H
b) 50 g Dimethylcarbonat
c) 2,7 g pulverförmiges Calciumoxid
d) 67,1 g Dipropylenglykol
e) 33,3 g Dimethylcarbonat

### Beispiel 3:

In einem Glaskolben mit Rührer und Rückflußkühler wurden 250 g CH₃O-(CH₂CH₂O)₁₁H, 55 g Dimethylcarbonat und 8,1 g Natriummethylat (30 %ig in Methanol) 2 Stunden unter Rückfluß erhitzt. Anschließend wurde am Deflekmator (65 °C) das entstehende Methanol mit dem begleitenden Dimethylcarbonat abdestilliert bis kein Kondensat mehr auftrat. Anschließend wurde die Reaktionsmischung mit 38,1 g Propylenglykol-1,2 und 45 g Dimethylcarbonat versetzt. Entstehendes Kondensat wurde über den Deflekmator abgeschieden. Die Reaktionstemperatur wurde am Ende der Reaktion bis auf 140 °C erhöht. Als kein Kondensat mehr überging, wurde 30 Minuten evakuiert (140 °C/18 mbar).

### Beispiel 4:

In einem Glaskolben mit Rührer und Deflekmator (80 °C) wurden 38,1 g Propandiol-1,2, 88,6 g Diethylcarbonat und 1,25 g Natriummethylat (30 %ig in Methanol) auf 130 °C erhitzt. Entstehendes Ethanol wurde über den Deflekmator abgeschieden. Als kein Kondensat mehr entstand, wurde durch die Reaktionsmischung Stickstoff geleitet, um die Reaktion zu vervollständigen. Als kein Ethanol mehr kondensierte, wurden 250 g Methanol x 11 EO hinzugegeben und weiter Ethanol abgeschieden. Am Ende der Reaktion wurde evakuiert (130 °C/18 mbar).

### Beispiel 5:

In einem Glaskolben mit Rührer wurden 442,8 g 1-Butanol x 12 EO, 67,6 g Butandiol-1,4, 202,5 g Dimethylcarbonat und 4,7 g Natriummethylat (30 %ig in Methanol) von 100 °C auf 140 °C innerhalb von 7 Stunden erhitzt. Durch die Reaktionsmischung wurde kontinuierlich Stickstoff geleitet und Kondensat abgeschieden. Anschließend wurde ca. 3 Stunden evakuiert (20 mbar).

### Beispiel 6:

Durchführung wie in Beispiel 5 beschrieben; dabei wurden folgende Edukte eingesetzt: 442,8 g 1-Butanol x 12 EO, 78,1 g Neopentylglykol, 202,5 g Dimethylcarbonat und 4,8 g Natriummethylat (30 %ig in Methanol).

### Beispiel 7:

Durchführung wie in Beispiel 5 beschrieben; dabei wurden folgende Edukte eingesetzt: 375 g Methanol x 11 EO, 57,2 g Propylenglykol-1,2, 202,5 g Dimethylcarbonat, 1,25 g Tetraisopropylorthotitanat.

### Beispiel 8:

Durchführung wie in Beispiel 5 beschrieben; dabei wurden folgende Edukte eingesetzt: 442,8 g 1-Butanol x 12 EO, 114,4 g Propandiol-1,2, 270,0 g Dimethylcarbonat und 5,0 g Natriummethylat (30 %ig in Methanol).

### 3. Biologische Abbaubarkeit

Exemplarisch wurde die biologische Abbaubarkeit nach dem geschlossenen Flaschentest bestimmt. Als Impfmaterial diente Klärschlamm aus der Kläranlage Hochdahl. Die biologische Abbaubarkeit wurde über den biologischen Sauerstoffbedarf (BSB) im Verhältnis zum chemischen Sauerstoffbedarf (CSB) nach verschiedenen Tagen bestimmt bei einer Prüfkonzentration von 2 mg Aktivsubstanz/l.

| | BSB/CSB in % nach Tagen | | | |
|---|---|---|---|---|
| Produkt nach Bsp. 5 | 7 | 14 | 21 | 28 |
| | 2 | 17 | 32 | 76 |

Demnach ist das Produkt nach Beispiel 5 gemäß OCD "readily biodegradable".

### 4. Anwendungsbeispiele

Polyesterfilamente (Garnart: PES Rhodia R; Feinheit: 167 dtex; Filamentzahl: f 34; Spinngeschwindigkeit: 3250 m/min) wurden mit Polyetherpolycarbonat nach Beispielen 1 und 2 aus wäßriger Lösung so präpariert, daß eine Ölauflage von 0,45 Gew.-% resultierte.

Nach 24-stündiger Klimatisierung bei 20 °C und 65 % relativer Feuchte wurde der dynamische Reibungskoeffizient gegen Stahl am Rothschild F-Meter bei Geschwindigkeit von 20, 50, 100 und 200 m/min gemessen.

Die elektrostatische Aufladung an Keramik wurde bei Geschwindigkeiten von 20 und 200 m/min gemessen mit Hilfe eines Eltex Induktivvoltmeters (Klima: 20 °C, 65 % realtive Feuchte).

Die Stick/Slip-Werte wurden mit einem Rothschild F-Meter gemessen (Umschlingung 3,5 x; Geschwindigkeit: 20 m/min).

Die Heizer- und Scheibenbeurteilung der Texturierorgane (Texturiermaschine der Fa. Barmag; Heizer: M-Typ; Keramikscheiben Anordnung 1-7-1 bei 220 °C, Texturiergeschwindigkeit 700 m/min) erfolgte durch subjektive Notenvergabe (1 = sehr gut, 6 = schlecht).

**Tabelle 1:**

| **Eigenschaften der Polyetherpolycarbonate** | | | | | | | | | |
|---|---|---|---|---|---|---|---|---|---|
| | V1^{a)} | B1 | B2 | B3 | B4 | B5 | B6 | B7 | B8 |
| Viskosität^{b)} (mPas) | 150 | 84 | 93 | 112 | 126 | 286 | 278 | n.b. | 200 |
| Aussehen der wäßr. Lösung (12,5 %ig) | klar | klar | klar | klar | klar | klar | klar | klar | opak |

| | | | | | | | | | |
|---|---|---|---|---|---|---|---|---|---|
| ^{a)} Produkt gemäß DE-A-41 13 889, Beispiel 1 (Vergleichsprodukt 1) | | | | | | | | | |
| ^{b)} gemessen in Substanz mit einem Brookfield-Viskosimeter, Spindel 3, bei 23 °C n.b. = nicht bestimmt | | | | | | | | | |

**Tabelle 2:**

| **Eigenschaften des texturierten Garns** | | | | | | | | | |
|---|---|---|---|---|---|---|---|---|---|
| Gleitmittel nach | dynamischer Reibungskoeffizient (mue) bei | | | | elektrostat. Aufladung (kV/m) | | Heizer (Note) | Scheiben (Note) | Stick/ Slip in cN |
| | 20 | 50 | 100 | 200 | 20 | 200 | | | |
| | m/min | | | | m/min | m/min | | | |
| B1 | 0,26 | - | 0,34 | 0,39 | 0 | 1,6 | 2,5 | 3,0 | 10,96 |
| B2 | 0,32 | - | 0,38 | 0,39 | 0,1 | -4,6 | 2,0 | 3,0 | 4,62 |
| V1 | - | 0,40 | - | - | - | - | 2,5 | 3,0 | - |
| | | | | | | | | | |
| V2^{c)} | 0,31 | - | 0,37 | 0,39 | -0,8 | -2,6 | 1,0 | 2,0 | 6,66 |

| | | | | | | | | | |
|---|---|---|---|---|---|---|---|---|---|
| ^{c)} Stantex VPS 6001 (Fa. Henkel) (Vergleichsprodukt 2) | | | | | | | | | |

## Patentansprüche

1. Spinnpräparationen für synthetische Filamentfasern enthaltend ein Gleitmittel mit guter biologischer Abbaubarkeit, **dadurch gekennzeichnet**, daß das Gleitmittel ein wasserlösliches Polyetherpolycarbonat der allgemeinen Formel (I) ist;
R¹-O-[(R²-O-)ₙCOO]ₘ-R³ (I)
dabei bedeuten:
- R¹: R⁴(O-CH₂-CH₂-)ₓO-CO, CH₃-O-CO, CH₃-CH₂-O-CO, Wasserstoff,
- R²: ein zweiwertiger Kohlenwasserstoffrest mit 1 bis 22 C-Atomen, der gesättigt oder ungesättigt, geradkettig oder verzweigt sein kann,
- R³: R⁴(O-CH₂-CH₂-)_{y},
- R⁴: ein einwertiger Kohlenwasserstoffrest mit 1 bis 22 C-Atomen, der gesättigt oder ungesättigt, geradkettig oder verzweigt sein kann
- n: eine ganze Zahl im Bereich von 1 bis 100,
- m: eine ganze Zahl im Bereich von 1 bis 50,
- x: eine Zahl im Bereich von 11 bis 100,
- y: eine Zahl im bereich von 11 bis 100.

2. Spinnpräperationen nach Anspruch 1, dadurch gekennzeichnet daß, das Gleitmittel ein Polyetherpolycarbonat der Formel (I) ist, wobei R⁴ für einen gesättigten Kohlenwasserstoffrest mit 1 bis 10 C-Atomen steht.

3. Spinnpräparationen nach Anspruch 1 oder 2, dadurch gekennzeichnet, daß das Gleitmittel ein Polyetherpolycarbonat der Formel (I) ist, wobei R² ein zweiwertiger Kohlenwasserstoffrest ist, abgeleitet von 1,2-Alkandiolen, alpha,omega-Alkandiole, Ethylenglykol und deren Homologe, Propylenglykol und deren Homologe oder Neopentylglykol.

4. Spinnpräparationen nach einem der Ansprüche 1 bis 3, dadurch gekennzeichnet, daß das Gleitmittel ein Polyetherpolycarbonat der Formel (I) ist, in der bedeuten
- R²: einen zweiwertigen Kohlenwasserstoffrest mit 2 bis 10 C-Atomen
- R⁴: einen einwertigen Kohlenwasserstoffrest mit 1 bis 10 C-Atomen
- n: eine ganze Zahl im Bereich von 1 bis 15
- m: eine ganze Zahl im Bereich von 1 bis 10
- x: eine Zahl im Bereich von 11 bis 50
- y: eine Zahl im Bereich von 11 bis 50.

5. Spinnpräparationen nach einem der Ansprüche 1 bis 4, dadurch gekennzeichnet, daß das Gleitmittel ein Polyetherpolycarbonat der Formel (I) ist, in der bedeuten
- R²: einen zweiwertigen Kohlenwasserstoffrest mit 2 bis 10 C-Atomen
- R⁴: einen einwertigen Kohlenwasserstoffrest mit 1 bis 10 C-Atomen
- n: die Zahl 1 oder 2.

6. Verwendung von Polyetherpolycarbonaten der Formel (I)
R¹-O-[(R²-O-)ₙCOO]ₘ-R³ (I)
dabei bedeuten:
- R¹: R⁴(O-CH₂-CH₂-)ₓO-CO, CH₃-O-CO, CH₃-CH₂-O-CO, Wasserstoff,
- R²: ein zweiwertiger Kohlenwasserstoffrest mit 1 bis 22 C-Atomen, der gesättigt oder ungesättigt, geradkettig oder verzweigt sein kann,
- R³: R⁴(O-CH₂-CH₂-)_{y},
- R⁴: ein einwertiger Kohlenwasserstoffrest mit 1 bis 22 C-Atomen, der gesättigt oder ungesättigt, geradkettig oder verzweigt sein kann
- n: eine ganze Zahl im Bereich von 1 bis 100,
- m: eine ganze Zahl im Bereich von 1 bis 50,
- x: eine Zahl im Bereich von 11 bis 100,
- y: eine Zahl im bereich von 11 bis 100
als Gleitmittel mit guter biologischer Abbaubarkeit in Spinnpräparationen für synthetische Filamentfasern.

## Claims

1. Spinning finishes for synthetic filament fibers containing a readily biodegradable lubricant, characterized in that the lubricant is a water-soluble polyether carbonate corresponding to general formula (I):
R¹-O-[(R²-O-)ₙCOO-]ₘR³ (I)
in which
- R¹ represents R⁴(O-CH₂-CH₂-)ₓO-CO-, CH₃-O-CO, CH₃-CH₂-O-CO, hydrogen,
- R² is a difunctional hydrocarbon radical containing 1 to 22 carbon atoms which may be saturated or unsaturated, linear or branched,
- R³ represents R⁴(O-CH₂-CH₂-)_{y},
- R⁴ is a monofunctional hydrocarbon radical containing 1 to 22 carbon atoms which may be saturated or unsaturated, linear or branched,
- n is an integer of 1 to 100,
- m is an integer of 1 to 50,
- x is an integer of 11 to 100 and
- y is an integer of 11 to 100.

2. Spinning finishes as claimed in claim 1, characterized in that the lubricant is a polyether carbonate corresponding to formula (I) in which R⁴ is a saturated hydrocarbon radical containing 1 to 10 carbon atoms.

3. Spinning finishes as claimed in claim 1 or 2, characterized in that the lubricant is a polyether carbonate corresponding to formula (I), in which R² is a difunctional hydrocarbon radical derived from 1,2-alkanediols, α,ω-alkanediols, ethylene glycol and homologs thereof, propylene glycol and homologs thereof or neopentyl glycol.

4. Spinning finishes as claimed in any of claims 1 to 3, characterized in that the lubricant is a polyether carbonate corresponding to formula (I) in which:
- R² is a difunctional hydrocarbon radical containing 2 to 10 carbon atoms,
- R⁴ is a monofunctional hydrocarbon radical containing 1 to 10 carbon atoms,
- n is an integer of 1 to 15,
- m is an integer of 1 to 10,
- x is a number of 11 to 50,
- y is a number of 11 to 50.

5. Spinning finishes as claimed in any of claims 1 to 4, characterized in that the lubricant is a polyether carbonate corresponding to formula (I), in which
- R² is a difunctional hydrocarbon radical containing 2 to 10 carbon atoms,
- R⁴ is a monofunctional hydrocarbon radical containing 1 to 10 carbon atoms and
- n is the number 1 or 2.

6. The use of polyether carbonates corresponding to formula (I):
R¹-O-[(R²-O-)ₙCOO-]ₘR³ (I)
in which
- R¹ represents R⁴(O-CH₂-CH₂-)ₓO-CO-, CH₃-O-CO, CH₃-CH₂-O-CO, hydrogen,
- R² is a difunctional hydrocarbon radical containing 1 to 22 carbon atoms which may be saturated or unsaturated, linear or branched,
- R³ represents R⁴(O-CH₂-CH₂-)_{y},
- R⁴ is a monofunctional hydrocarbon radical containing 1 to 22 carbon atoms which may be saturated or unsaturated, linear or branched,
- n is an integer of 1 to 100,
- m is an integer of 1 to 50,
- x is an integer of 11 to 100 and
- y is an integer of 11 to 100,
as readily biodegradable lubricants in spin finishes for synthetic filament fibers.

## Revendications

1. Compositions de filage pour fibres de filaments synthétiques contenant un lubrifiant ayant une bonne biodégradabilité,
caractérisées en ce que
le lubrifiant est un polyéther-polycarbonate soluble dans l'eau de formule générale (I)
R¹-O-[(R²-O-)ₙCOO-]ₘR³ (I)
dans laquelle
R¹ : représente R⁴ (-O-CH₂-CH₂-)ₓO-CO-, CH₃-O-CO-, CH₃-CH₂-O- CO-, un hydrogène,
R² : représente un radical hydrocarboné bivalent avec 1 à 22 atomes de carbone, qui peut être saturé ou insaturé, à chaîne droite ou ramifiée,
R³ : représente R⁴ (-O-CH₂-CH₂-)_{y},
R⁴ : représente un radical hydrocarboné monovalent avec 1 à 22 atomes de carbone, qui peut être saturé ou insaturé, à chaîne droite ou ramifiée,
n : représente un nombre entier compris entre 1 et 100,
m : représente un nombre entier compris entre 1 et 50,
x : représente un nombre compris entre 11 et 100,
y : représente un nombre compris entre 11 et 100.

2. Compositions de filage selon la revendication 1, caractérisées en ce que
le lubrifiant est un polyéther-polycarbonate de formule (I) dans laquelle R⁴ représente un radical hydrocarboné avec 1 à 10 atomes de carbone.

3. Compositions de filage selon la revendication 1 ou 2, caractérisées en ce que
le lubrifiant set polyéther-polycarbonate de formule (I) dans laquelle R² est un radical hydrocarboné bivalent dérivé de 1,2-alcanediols, d'alpha,oméga-alcanediols, d'éthylène glycol et de ses homologues, de propylène glycol et de ses homologues ou du néopentylglycol.

4. Compositions de filage selon l'une des revendications 1 à 3,
caractérisées en ce que
le lubrifiant est un polyéther-polycarbonate de formule (I) dans laquelle :
R² : représente un radical hydrocarboné bivalent avec 2 à 10 atomes de carbone,
R⁴ : représente un radical hydrocarboné monovalent avec 1 à 10 atomes de carbone,
n : représente un nombre entier compris entre 1 et 15,
m : représente un nombre entier compris entre 1 et 10,
x : représente un nombre compris entre 11 et 50,
y : représente un nombre compris entre 11 et 50.

5. Compositions de filage selon l'une des revendications 1 à 4,
caractérisées en ce que
le lubrifiant est un polyéther de formule (I) dans laquelle :
R² : représente un radical hydrocarboné bivalent avec 2 à 10 atomes de carbone
R⁴ : représente un radical hydrocarboné monovalent avec 1 à 10 atomes de carbone
n : représente le nombre 1 ou 2.

6. Utilisation des polyéther-polycarbonates de formule (I)
R¹-O-[(R²-O-)ₙCOO]ₘ-R³ (I)
dans laquelle
R¹ : représente R⁴(-O-CH₂-CH₂-)ₓO-CO-, CH₃-O-CO-, CH₃-CH₂-O- CO-, un hydrogène,
R² : représente un radical hydrocarboné bivalent avec 1 à 22 atomes de carbone, qui peut être saturé ou insaturé, à chaîne droite ou ramifiée,
R³ : représente R⁴(-O-CH₂-CH₂-)_{y},
R⁴ : représente un radical hydrocarboné monovalent avec 1 à 22 atomes de carbone, qui peut être saturé ou insaturé, à chaîne droite ou ramifiée,
n : représente un nombre entier compris entre 1 et 100,
m : représente un nombre entier compris entre 1 et 50,
x : représente un nombre entier compris entre 11 et 100,
y représente un nombre entier compris entre 11 et 100.
comme lubrifiant ayant une bonne dégradabilité dans les préparations de filage pour fibres de filaments synthétiques.
